# EUROPÄISCHE PATENTSCHRIFT

(11) **EP 2 821 246 B1**
(45) Veröffentlichungstag und Bekanntmachung des Hinweises auf die Patenterteilung: **14.09.2016**
(21) Anmeldenummer: 13174978.0
(22) Anmeldetag: 03.07.2013
(51) Int. Cl.: B60C 1/00, C08L 7/00, C08L 9/00, C08K 5/01, C08L 91/00

(54) **KAUTSCHUKMISCHUNG UND FAHRZEUGLUFTREIFEN**
RUBBER COMPOSITION AND PNEUMATIC TYRE FOR A VEHICLE
MÉLANGE DE CAOUTCHOUC ET PNEU DE VÉHICULE

(43) Veröffentlichungstag der Anmeldung: 07.01.2015
(73) Patentinhaber: Continental Reifen Deutschland GmbH, 30165 Hannover (DE)
(72) Erfinder: Schwarzendahl, Corinna, 30167 Hannover (DE); Tang, Hon Peng, 46050 Petaling Jaya (MY); Busch, Verena, 30890 Barsinghausen (DE); Pietag, Thomas, 31655 Stadthagen (DE); Francke, Martin, 30823 Garbsen (DE)

(56) Entgegenhaltungen:
- EP-A1- 0 490 533
- EP-A1- 1 876 037
- EP-A1- 2 311 907
- DE-A1-102004 009 010
- DATABASE WPI Week 200474 Thomson Scientific, London, GB; AN 2004-752380 XP002714960, & JP 2004 300361 A (TOYO RUBBER IND CO LTD) 28. Oktober 2004 (2004-10-28)
- DATABASE WPI Week 199220 Thomson Scientific, London, GB; AN 1992-163790 XP002714961, & JP H04 103646 A (BRIDGESTONE CORP) 6. April 1992 (1992-04-06)

## Beschreibung

Die Erfindung betrifft eine Kautschukmischung und einen Fahrzeugluftreifen.

Es ist bekannt, dass Fahrzeugluftreifen Bestandteile enthalten, die die Alterung und Oxidation der enthaltenen Kautschuke und sonstigen Bestandteile deutlich verlangsamen und somit die Haltbarkeit über eine relativ lange Lebensdauer des Reifens positiv beeinflussen.

Ferner ist es jedoch auch bekannt, dass in den äußeren Bauteilen von Fahrzeugluftreifen enthaltene Alterungsschutzmittel und Ozonschutzwachse an die Oberfläche migrieren können und dort einen sichtbaren Film bilden. Dieses sogenannte Ausblühen wirkt sich wiederum nachteilig auf das optische Erscheinungsbild des Fahrzeugluftreifens aus.

In der EP 0867472 A1 wird eine Kautschukmischung für die Seitenwand von Fahrzeugluftreifen offenbart, die ein Wachs enthält, welches eine Komponente mit 45 oder mehr Kohlenstoffatomen in einer Menge von 3 bis 10 Gew.-% enthält.

Auch in der EP 1876037 B1 wird eine Kautschukmischung, die Paraffinwachs enthält, für die Seitenwand von Fahrzeugluftreifen beschrieben.

Die EP 0490533 B1 offenbart eine Kautschukmischung, die Naturkautschuk und Polypropylen sowie eine Paraffinwachsmischung enthält, deren Gehalt an Kohlenwasserstoffen mit 31 bis 44 Kohlenstoffatomen jeweils nicht weniger als 2 Gewichtsprozente betragen.

Die WO 2013/046845 offenbart eine Kautschukmischung enthaltend 40 phr Butadienkautschuk, 60 phr Naturkautschuk, 30 phr Ruß N550, 1,7 phr Schwefel, 0,7 phr des Sulfenamidbeschleunigers TBBS und 1,8 phr eines Ozonschutzwachses mit einer Kettenlängenverteilung bestehend aus wenigstens den drei Bereichen A und B und C:
- i.: Bereich A: Kohlenwasserstoffe mit 26 bis 31 Kohlenstoffatomen
- ii.: Bereich B: Kohlenwasserstoffe mit 32 bis 36 Kohlenstoffatomen
- iii.: Bereich C: Kohlenwasserstoffe mit 37 bis 47 Kohlenstoffatomen,
wobei die relativen Mengenanteile der Bereiche von A zu B zu C
1,1 zu 1 zu 1,1 betragen.

Die genannten Schriften haben gemein, dass mit der Zusammensetzung der Kautschukmischung das optische Erscheinungsbild und/oder die Rissbeständigkeit verbessert werden soll.

Der Erfindung liegt vor dem Hintergrund des Standes der Technik nun die Aufgabe zugrunde, eine Kautschukmischung für äußere Bauteile von Fahrzeugluftreifen bereitzustellen, die eine weitere Verbesserung hinsichtlich des Ausblühverhaltens zeigt, wobei die Alterungsbeständigkeit sowie die übrigen physikalischen Eigenschaften, wie Zugfestigkeit und/oder Härte und/oder Reißeigenschaften und/oder Rückprallelastizitäten, nicht negativ beeinträchtigt und/oder sogar verbessert werden.

Gelöst wird die Aufgabe erfindungsgemäß dadurch, dass die Kautschukmischung folgende Bestandteile enthält:
- 15 bis 55 phr zumindest eines natürlichen Polyisoprens und/oder 15 bis 55 phr zumindest eines synthetischen Polyisoprens und
- 15 bis 85 phr zumindest eines Polybutadiens und
- 25 bis 55 phr zumindest eines Rußes und
- 1 bis 10 phr wenigstens eines Ozonschutzwachses, wobei das Ozonschutzwachs unverzweigte Kohlenwasserstoffe mit folgender Kettenlängenverteilung bestehend aus wenigstens den drei Bereichen A und B und C enthält:
   i. Bereich A: Kohlenwasserstoffe mit 26 bis 31 Kohlenstoffatomen
   ii. Bereich B: Kohlenwasserstoffe mit 32 bis 36 Kohlenstoffatomen
   iii. Bereich C: Kohlenwasserstoffe mit 37 bis 47 Kohlenstoffatomen,
   wobei die relativen Mengenanteile der Bereiche von A zu B zu C
   0,7 bis 1,5 zu 1 zu 0,6 bis 1,4 betragen und
- 2,0 bis 2,4 phr Schwefel und
- _0,9 bis 1,3 phr zumindest eines Sulfenamidbeschleunigers.

### s. S. 2a

Überraschenderweise zeigt die Kautschukmischung mit der Kombination der genannten Bestandteile ein besonders geringes Ausblühverhalten, was sich in einem verbesserten optischen Erscheinungsbild der Kautschukmischung nach einer entsprechenden Dauer zeigt.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die erfindungsgemäße Kautschukmischung enthält 15 bis 55 phr zumindest eines natürlichen Polyisoprens und/oder 15 bis 55 phr zumindest eines synthetischen Polyisoprens.
Bevorzugt beträgt die Menge an natürlichem und/oder synthetischem Polyisopren 25 bis 55 phr, besonders bevorzugt 35 bis 55 phr.
Dies bedeutet, dass auch eine Kombination von natürlichem und synthetischem Polyisopren denkbar ist.

In einer besonders bevorzugten Ausführungsform der Erfindung enthält die Kautschukmischung 40 bis 55 phr, wenigstens eines natürlichen und/oder synthetischen Polyisoprens. Dies bedeutet, dass auch eine Kombination von natürlichem und synthetischem Polyisopren denkbar ist. Bevorzugt handelt es sich in dieser Ausführungsform jedoch um natürliches Polyisopren. Eine derartige Kautschukmischung zeigt insbesondere in der Seitenwand von Fahrzeugluftreifen ein besonders gutes Ausblühverhalten sowie vergleichsweise gute Reiß- und Abriebeigenschaften, insbesondere nach der Alterung.

Dabei kann es sich bei dem natürlichen und dem synthetischen Polyisopren um alle dem Fachmann bekannten Typen handeln.

Die erfindungsgemäße Kautschukmischung enthält 15 bis 85 phr, bevorzugt 15 bis 59 phr, zumindest eines Polybutadiens.
In einer besonders bevorzugten Ausführungsform der Erfindung enthält die Kautschukmischung 15 bis 50 phr, ganz besonders bevorzugt 15 bis 30 phr, wenigstens eines Polybutadiens. Eine derartige Kautschukmischung zeigt insbesondere in der Seitenwand von Fahrzeugluftreifen ein besonders gutes Ausblühverhalten sowie vergleichsweise gute Reiß- und Abriebeigenschaften, insbesondere nach der Alterung.

Bei dem Polybutadien (BR, Butadien-Kautschuk) kann es sich um alle dem Fachmann bekannten Typen handeln. Darunter fallen u.a. die sogenannten high-cis- und low-cis-Typen, wobei Butadien-Kautschuk mit einem cis-Anteil größer oder gleich 90 Gew.-% als high-cis-Typ und Butadien-Kautschuk mit einem cis-Anteil kleiner als 90 Gew.-% als lowcis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Ein high-cis-Polybutadien ist z.B. Nd-BR (Neodym-katalysierter Butadien-Kautschuk). Mit Nd-BR werden besonders gute Vulkanisateigenschaften der Kautschukmischung erzielt.
Das eingesetzte Polybutadien kann endgruppenmodifiziert sein.

Gemäß einer vorteilhaften Weiterbildung der Erfindung ist noch wenigstens ein weiterer Dienkautschuk in der Kautschukmischung enthalten, wobei alle dem Fachmann bekannten Dienkautschuke in Frage kommen. Bevorzugt ist gemäß der vorteilhaften Weiterbildung wenigstens ein Styrol-Butadien-Kautschuk in der Kautschukmischung enthalten.
Bei dem Styrol-Butadien-Kautschuk (Styrol-Butadien-Copolymer) kann es sich um lösungspolymerisiertes Styrol-Butadien-Copolymer (S-SBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein.
Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die erfindungsgemäße Kautschukmischung enthält 25 bis 55 phr, bevorzugt 25 bis 49 phr, zumindest eines Rußes. Eine derartige Kautschukmischung zeigt insbesondere in der Seitenwand von Fahrzeugluftreifen ein besonders gutes Ausblühverhalten sowie vergleichsweise gute Reißeigenschaften, insbesondere nach der Alterung, und verringert zudem den Rollwiderstand des Reifens.

In einer bevorzugten Ausführungsform der Erfindung enthält die Kautschukmischung 25 bis 43 phr, besonders bevorzugt 30 bis 39 phr zumindest eines Rußes.

Dabei sind alle dem Fachmann bekannten Ruß-Typen denkbar.
Bevorzugt wird jedoch ein Ruß eingesetzt, der eine Jodadsorptionszahl gemäß ASTM D 1510 von 15 bis 100 g/kg, bevorzugt 30 bis 100 g/kg, besonders bevorzugt 50 bis 100 kg/g, und eine DBP-Zahl gemäß ASTM D 2414 von 30 bis 150 ml/100 g, bevorzugt 50 bis 150 ml/100g, besonders bevorzugt 100 bis 150 ml/100g, aufweist.
Hiermit werden bei der Anwendung im Fahrzeugluftreifen besonders gute Rollwiderstands-und/oder Reißeigenschaften erzielt.

Gemäß einer bevorzugten Ausführungsform der Erfindung wird ein Ruß eingesetzt, der eine Jodadsorptionszahl gemäß ASTM D 1510 von 80 bis 100 g/kg und eine DBP-Zahl gemäß ASTM D 2414 von 115 bis 127 ml/100 g aufweist.

Die erfindungsgemäße Kautschukmischung kann neben Ruß noch weitere bekannte polare und/oder unpolare Füllstoffe enthalten.

Bevorzugt ist in der erfindungsgemäßen Kautschukmischung Ruß als alleiniger Füllstoff oder als Hauptfüllstoff enthalten, das heißt, dass die Rußmenge deutlich größer ist als die Menge an ggf. anderen enthaltenen Füllstoffen. Für den Fall, dass neben Ruß ein weiterer Füllstoff enthalten ist, handelt es sich bei diesem bevorzugt um Kieselsäure. Somit ist es auch denkbar, dass die erfindungsgemäße Kautschukmischung Ruß und Kieselsäure enthält, wie z.B. 20 bis 100 phr Ruß in Kombination mit 0,1 bis 10 phr Kieselsäure.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 125 bis 230 m²/g, aufweist. Derartige Kieselsäuren führen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können dem Fachmann bekannte Silan-Kupplungsagenzien in Kautschukmischungen eingesetzt werden.

Besonders bevorzugt ist die Kautschukmischung jedoch frei von weiteren Füllstoffen außer Ruß, d.h. in dieser bevorzugten Ausführungsform enthält die Kautschukmischung 0 phr eines weiteren Füllstoffs. Somit ist in dieser Ausführungsform keine Dosierung eines zweiten Füllstoffs notwendig.
Zinkoxid wird im Rahmen der vorliegenden Erfindung nicht als Füllstoff betrachtet.

Es ist erfindungswesentlich, dass die Kautschukmischung 1 bis 10 phr wenigstens eines Ozonschutzwachses enthält, wobei das Ozonschutzwachs unverzweigte Kohlenwasserstoffe mit folgender Kettenlängenverteilung bestehend aus wenigstens den drei Bereichen A und B und C enthält:
Bereich A: Kohlenwasserstoffe mit 26 bis 31 Kohlenstoffatomen 7
Bereich B: Kohlenwasserstoffe mit 32 bis 36 Kohlenstoffatomen
Bereich C: Kohlenwasserstoffe mit 37 bis 47 Kohlenstoffatomen,
wobei die relativen Mengenanteile der Bereiche von A zu B zu C
0,7 bis 1,5 zu 1 zu 0,6 bis 1,4 betragen.

Hierbei sind alle dem Fachmann bekannten Ozonschutzwachse denkbar. Bevorzugt ist das Ozonschutzwachs ein Paraffinwachs.

Die Bestimmung der Kettenlängenverteilung erfolgt mittels Gaschromatographie gekoppelt mit einem Flammen-Ionisations-Detektor (GC-FID). Die Durchführung und Auswertung erfolgt gemäß der EWF-Methode (European Wax Federation).

Zu jeder Kettenlänge der unverzweigten Kohlenwasserstoffe wird der relative Mengenanteil bestimmt. Unter "relativem Mengenanteil eines unverzweigten Kohlenwasserstoffes" wird im Rahmen der vorliegenden Erfindung der Anteil der Peak-Fläche bzw. Signal-Fläche eines Kohlenwasserstoffes bezogen auf die Gesamtheit aller Peak-Flächen bzw. Signal-Flächen des Ozonschutzwachses verstanden.

Der relative Mengenanteil jedes Bereiches A, B und C wird durch Aufsummierung der einzelnen relativen Mengenanteile der jeweilig dazugehörigen unverzweigten Kohlenwasserstoffe (n-Alkane) berechnet.

Bevorzugt ist es, wenn das Verhältnis von unverzweigten (n, normal) zu verzweigten (iso) Kohlenwasserstoffen des Ozonschutzwachses bezogen auf die Gesamtheit des Ozonschutzwachses, also die gesamte Kettenlängenverteilung inklusive der Bereiche A, B und C, 95 zu 5 bis 65 zu 35 beträgt.
Unter unverzweigten Kohlenwasserstoffen versteht der Fachmann n-Alkane.

Weiterhin ist es bevorzugt, wenn der relative Mengenanteil jedes der einzelnen unverzweigten Kohlenwasserstoffe mit einer Zahl der Kohlenstoffatome von 26 bis 47 des Ozonschutzwachses 5,5 % nicht überschreitet. Dies bedeutet, dass die Kettenlängenverteilung der unverzweigten Kohlenwasserstoffe mit 26 bis 47 Kohlenstoffatomen vergleichsweise flach ist.
Mit einer derartigen Kettenlängenverteilung des Ozonschutzwachses wird in der erfindungsgemäßen Kautschukmischung ein besonders geringes und damit gutes Ausblühverhalten erzielt.
Das Ozonschutzwachs enthält wie oben beschrieben unverzweigte Kohlenwasserstoffe mit einer Kettenlänge von 26 bis 47 Kohlenstoffatomen. Ferner kann das Ozonschutzwachs unverzweigte Kohlenwasserstoffe mit einer Kettenlänge von 25 oder weniger Kohlenstoffatomen und/oder 48 oder mehr Kohlenstoffatomen enthalten.

Es ist zudem bevorzugt, wenn das Ozonschutzwachs n-Alkane mit 25 oder weniger und 48 oder mehr Kohlenstoffatomen mit einem Gesamtmengenanteil von 0 bis 18 % enthält.
Hierbei beträgt der Gesamtmengenanteil der n-Alkane mit 25 oder weniger Kohlenstoffatomen bevorzugt 5 bis 12 % und der Gesamtmengenanteil der n-Alkane mit 48 oder mehr Kohlenstoffatomen bevorzugt 0 bis 6 %.

Das beschriebene Ozonschutzwachs ist in Mengen von 1 bis 10 phr, bevorzugt 1 bis 5 phr, besonders bevorzugt 1 bis 3 phr in der erfindungsgemäßen Kautschukmischung enthalten.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Harze, wie Phenolharze und/oder aliphatische Harze,
d) Mastikationshilfsmittel, wie z. B. 2,2'-Dibenzamidodiphenyldisulfid (DBD),
e) Weichmacher, wie unten beschrieben.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 4 phr, bevorzugt 0,1 bis 3,8 phr, besonders bevorzugt 2 bis 3,8 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Es können in der Kautschukmischung noch 0 bis 70 phr, bevorzugt 0,1 bis 60 phr, bevorzugt 10 bis 50 phr, zumindest eines Weichmachers vorhanden sein, die zu den Zusatzstoffen zählen. Dieser Weichmacher ist ausgewählt aus der Gruppe, bestehend aus Mineralölen und/oder synthetischen Weichmachern und/oder Fettsäuren und/oder Fettsäurederivaten und/oder Harzen und/oder Faktisse und/oder Glyceriden und/oder Terpenen und/oder Biomass-To-Liquid-Ölen (BTL-Öle) und/oder Rubber-To-Liquid-Ölen (RTL-Öle) und/oder flüssigen Polymeren, wobei Mineralöle besonders bevorzugt sind. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenisches Öl.

Die Vulkanisation wird in Anwesenheit von Schwefel mit Hilfe von Vulkanisationsbeschleunigern durchgeführt, wobei einige
Vulkanisationsbeschleuniger zugleich als Schwefelspender wirken können. Schwefel sowie ein oder mehrere Beschleuniger werden im letzten Mischungsschritt in den genannten Mengen der Kautschukmischung zugesetzt.

Erfingdungsgemäß enthält die erfindungsgemäße Kautschukmischung elementaren Schwefel in Mengen von 2,0 bis 2,4 phr Schwefel. Eine derartige Kautschukmischung zeigt insbesondere in der Seitenwand von Fahrzeugluftreifen ein besonders gutes Ausblühverhalten sowie vergleichsweise gute Reiß- und Abriebeigenschaften, insbesondere nach der Alterung.

Erfindungsgemäß enthält die erfindungsgemäße Kautschukmischung 0,9 bis 1,3 phr zumindest eines Sulfenamidbeschleunigers. Eine derartige Kautschukmischung zeigt insbesondere in der Seitenwand von Fahrzeugluftreifen ein besonders gutes Ausblühverhalten sowie vergleichsweise gute Reiß- und Abriebeigenschaften, insbesondere nach der Alterung.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).
In einer bevorzugten Ausführungsform der Erfindung enthält die Kautschukmischung CBS und/oder TBBS als Beschleuniger. Hierdurch werden besonders gute Reißeigenschaften der Kautschukmischung erzielt.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Eine weitere Aufgabe der vorliegenden Erfindung besteht darin, einen Fahrzeugluftreifen bereitzustellen, der sich durch ein verbessertes optisches Erscheinungsbild hinsichtlich des Ausblühverhaltens auszeichnet, wobei die Alterungsbeständigkeit sowie die übrigen Reifeneigenschaften, wie Handling-Verhalten und/oder Nassbremsen und/oder Reißeigenschaften und/oder Rollwiderstand, nicht negativ beeinträchtigt und/oder sogar verbessert werden. Gelöst wird diese Aufgabe dadurch, dass der Fahrzeugluftreifen in wenigstens einem Bauteil wenigstens eine erfindungsgemäße Kautschukmischung wie oben beschrieben enthält. Dabei gelten alle oben genannten Ausführungen zu den Bestandteilen und deren Merkmale.
Bevorzugt handelt es sich bei dem Bauteil um ein äußeres Bauteil, besonders bevorzugt um eine Seitenwand und/oder ein Hornprofil.
Ganz besonders bevorzugt handelt es sich um die Seitenwand.
- Zugfestigkeit bei Raumtemperatur gemäß DIN 53 504
- Ausblühverhalten: gebaute und vulkanisierte Reifen wurden für 3 Monate, vor Feuchtigkeit und Sonneneinstrahlung geschützt, gelagert und anschließend visuell evaluiert. Klasse 1: zufriedenstellendes optisches Erscheinungsbild, Klasse 2: ausreichendes optisches Erscheinungsbild, Klasse 3: ungenügendes optisches Erscheinungsbild
- Ozonbeständigkeit bei Raumtemperatur gemäß der DIN 53 509 / DIN ISO 1431-1 ähnlichen Bedingungen: Ozonkonzentration 200 pphm, +/- 30 pphm, Temperatur 25°C +/-3 °C, 60% +/-5 % Luftfeuchtigkeit und einer statischer Dehnung zwischen 10 und 60%, wobei die Bewertung in Anlehnung an DIN 53 509 / DIN ISO 1431-1 erfolgt, Bewertung: positiv (keine Rissbildung) oder negativ (Rissbildung)

**Tabelle 1**

| **Bestandteile** | **Einheit** | **V1** | **E1** |
|---|---|---|---|
| Naturkautschuk TSR | phr | 40 | 40 |
| Polyisopren, synthetisch | phr | 10 | 10 |
| Butadienkautschuk ^{a)} | phr | 20 | 20 |
| SBR ^{b)} | phr | 30 | 30 |
| Ruß N339 | phr | 33 | 33 |
| Alterungsschutzmittel | phr | 5 | 5 |
| Sonstige Zusatzstoffe | phr | 14,5 | 14,5 |
| Ozonschutzwachs A ^{c)} | phr | 1,5 | - |
| Ozonschutzwachs B ^{d)} | phr | - | 1,5 |
| Schwefel und Sulfenamidbeschleuniger | phr | 3,3 | 3,3 |
| | | | |

| **Eigenschaften** | | | |
|---|---|---|---|
| Zugfestigkeit bei RT | MPa | 11 | 14 |
| Rückprallelastizität bei RT | % | 51 | 51 |
| Shore Härte bei RT | Shore A | 49 | 49 |
| Ausblühverhalten | Klasse | 3 | 1 |
| Ozonbeständigkeit | | positiv | positiv |

| | | | |
|---|---|---|---|
| ^{a)} Butadienkautschuk, Nd-katalysiert, hoch-cis BR ^{b)} Styrol-Butadien-Kautschuk, lösungspolymerisiert, SBR 1500 ^{c)} Ozonschutzwachs A: Okerin^{®} 2122H, Fa. Paramelt, Kettenlängenverteilung A zu B zu C = 1,2 zu 1 zu 0,3 ^{d)} Ozonschutzwachs B: VARAZON^{®} 6500, Fa. Sasol Wax GmbH, Kettenlängenverteilung A zu B zu C = 1,1 zu 1 zu 1 | | | |

Wie aus der Tabelle 1 hervorgeht, zeigt die erfindungsgemäße Kautschukmischung E1 im Vergleich zu ihrer Referenz V1 ein deutlich besseres Ausblühverhalten, womit die erfindungsgemäße Mischung auf einem zufriedenstellenden Niveau liegt. Gleichzeitig werden die sonstigen Eigenschaften, insbesondere die Ozonbeständigkeit, nicht negativ beeinträchtigt.

## Patentansprüche

1. Kautschukmischung enthaltend wenigstens die folgenden Bestandteile:
- 15 bis 55 phr zumindest eines natürlichen Polyisoprens und/oder 15 bis 55 phr zumindest eines synthetischen Polyisoprens und
- 15 bis 85 phr zumindest eines Polybutadiens und
- 25 bis 55 phr zumindest eines Rußes und
- 1 bis 10 phr wenigstens eines Ozonschutzwachses, wobei das Ozonschutzwachs unverzweigte Kohlenwasserstoffe mit folgender Kettenlängenverteilung bestehend aus wenigstens den drei Bereichen A und B und C enthält:
i. Bereich A: Kohlenwasserstoffe mit 26 bis 31 Kohlenstoffatomen
ii. Bereich B: Kohlenwasserstoffe mit 32 bis 36 Kohlenstoffatomen
iii. Bereich C: Kohlenwasserstoffe mit 37 bis 47 Kohlenstoffatomen,
wobei die relativen Mengenanteile der Bereiche von A zu B zu C
0,7 bis 1,5 zu 1 zu 0,6 bis 1,4 betragen, und
- 2,0 bis 2,4 phr Schwefel und
- 0,9 bis 1,3 phr zumindest eines Sulfenamidbeschleunigers.

2. Kautschukmischung nach Anspruch 1, **dadurch gekennzeichnet, dass** das Verhältnis n zu iso des Ozonschutzwachses bezogen auf die Gesamtheit des Ozonschutzwachses 95 zu 5 bis 65 zu 35 beträgt.

3. Kautschukmischung nach einem der Ansprüche 1 oder 2, **dadurch gekennzeichnet, dass** der relative Mengenanteil jedes der einzelnen unverzweigten Kohlenwasserstoffe mit einer Zahl der Kohlenstoffatome von 26 bis 47 des Ozonschutzwachses 5,5 % nicht überschreitet.

4. Kautschukmischung nach einem der Ansprüche 1 bis 3, **dadurch gekennzeichnet, dass** das Ozonschutzwachs n-Alkane mit 25 oder weniger und 48 oder mehr Kohlenstoffatomen mit einem Gesamtmengenanteil von 0 bis 18 % enthält.

5. Fahrzeugluftreifen, **dadurch gekennzeichnet, dass** er wenigstens eine Kautschukmischung gemäß einem der Ansprüche 1 bis 4 in wenigstens einem äußeren Bauteil aufweist.

## Claims

1. Rubber mixture comprising at least the following constituents:
- 15 to 55 phr of at least one natural polyisoprene and/or 15 to 55 phr of at least one synthetic polyisoprene and
- 15 to 85 phr of at least one polybutadiene and
- 25 to 55 phr of at least one carbon black and
- 1 to 10 phr of at least one antiozonant wax, wherein the antiozonant wax comprises unbranched hydrocarbons having the following chain length distribution composed of at least the three regions A and B and C:
i. region A: hydrocarbons having 26 to 31 carbon atoms
ii. region B: hydrocarbons having 32 to 36 carbon atoms
iii. region C: hydrocarbons having 37 to 47 carbon atoms, wherein the relative proportions of the regions A:B:C are 0.7 to 1.5:1:0.6 to 1.4, and
- 2.0 to 2.4 phr of sulphur and
- 0.9 to 1.3 phr of at least one sulphenamide accelerator.

2. Rubber mixture according to Claim 1, **characterized in that** the n:iso ratio of the antiozonant wax based on the entirety of the antiozonant wax is 95:5 to 65:35.

3. Rubber mixture according to either of Claims 1 and 2, **characterized in that** the relative proportion of each of the individual unbranched hydrocarbons having a number of carbon atoms from 26 to 47 in the antiozonant wax does not exceed 5.5%.

4. Rubber mixture according to any of Claims 1 to 3, **characterized in that** the antiozonant wax comprises n-alkanes having not more than 25 or not fewer than 48 carbon atoms in a total proportion of from 0% to 18%.

5. Pneumatic vehicle tire, **characterized in that** it comprises at least one rubber mixture according to any of Claims 1 to 4 in at least one outer component.

## Revendications

1. Mélange de caoutchouc contenant au moins les constituants suivants :
- 15 à 55 pce d'au moins un polyisoprène naturel et/ou 15 à 55 pce d'au moins un polyisoprène synthétique, et
- 15 à 85 pce d'au moins un polybutadiène, et
- 25 à 55 pce d'au moins un noir de carbone, et
- 1 à 10 pce d'au moins une cire anti-ozone, la cire anti-ozone contenant des hydrocarbures non ramifiés ayant la distribution de longueurs de chaînes suivante constituée par au moins les trois zones A et B et C :
i. zone A : hydrocarbures de 26 à 31 atomes de carbone,
ii. zone B : hydrocarbures de 32 à 36 atomes de carbone,
iii. zone C : hydrocarbures de 37 à 47 atomes de carbone,
les proportions relatives des zones A sur B sur C étant de 0,7 à 1,5 sur 1 sur 0,6 à 1,4, et
- 2,0 à 2,4 pce de soufre et
- 0,9 à 1,3 pce d'au moins un accélérateur de sulfénamide.

2. Mélange de caoutchouc selon la revendication 1, **caractérisé en ce que** le rapport n sur iso de la cire anti-ozone par rapport à la totalité de la cire anti-ozone est de 95 sur 5 à 65 sur 35.

3. Mélange de caoutchouc selon l'une quelconque des revendications 1 ou 2, **caractérisé en ce que** la proportion relative de chacun des hydrocarbures non ramifiés individuels ayant un nombre d'atomes de carbone de 26 à 47 de la cire anti-ozone ne dépasse pas 5,5 %.

4. Mélange de caoutchouc selon l'une quelconque des revendications 1 à 3, **caractérisé en ce que** la cire anti-ozone contient des n-alcanes de 25 atomes de carbone ou moins et 48 atomes de carbone ou plus en une proportion totale de 0 à 18 %.

5. Pneu automobile, **caractérisé en ce qu'**il comprend au moins un mélange de caoutchouc selon l'une quelconque des revendications 1 à 4 dans au moins un composant extérieur.
